Europäisches Patentamt

European Patent Office

Office européen des brevets

(11) Veröffentlichungsnummer: **0 287 779**
**A1**

## EUROPÄISCHE PATENTANMELDUNG

(21) Anmeldenummer: 88102904.5

(22) Anmeldetag: 26.02.88

(51) Int. Cl.4: **F24J 2/34**

(30) Priorität: 26.02.87 DE 3706196 U

(43) Veröffentlichungstag der Anmeldung:
26.10.88 Patentblatt 88/43

(84) Benannte Vertragsstaaten:
**AT CH DE ES FR GB GR IT LI NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Boy, Elmar, Dipl.-Ing.**
**Pfeilstrasse 26A**
**D-7000 Stuttgart 80(DE)**
Erfinder: **Pfender, Conrad, Dr. Ing.**
**Thomas Mann-Strasse 30**
**D-7015 Korntal-Münchingen 2(DE)**

(54) **Solar-Warmwasserbereiter.**

(57) Solar beheizter Durchlauferhitzer in Form eines Solarkollektors mit integrierter Speichermasse aus Phasenwechselmaterial, dessen Absorber (2, 7) unmittelbar von dem zu erwärmenden Wasser (1) durchströmt wird, welches ohne Zwischenschaltung eines Speichermediums im wesentlichen unmittelbar durch die Solarstrahlung aufgeheizt wird; die dabei nicht abgeführte Wärme wird der in direktem, gut wärmeleitendem Kontakt mit dem Absorber stehenden Speichermasse (3) zugeführt.

Fig.1

EP 0 287 779 A1

## Solar-Warmwasserbereiter

Die Erfindung befaßt sich mit der Warmwasserbereitung durch einen Solarkollektor, der mit einer durch Wechsel ihrer Phase, vorzugsweise zwischen fest und flüssig, latent Wärme speichernden Masse - Phasenwechselmaterial - gefüllt ist. Es ist bekannt, solche Kollektoren in einem Zweikreissystem einzusetzen, in welchem die in ihrer Intensität - schwankende Strahlungsenergie über den Solarkollektor als Wärme gespeichert und an ein Strömungs-bzw. Wärmetransportmittel in einem Kreislauf abgegeben wird, der über einen Wärmetauscher mit einem Leitungssystem für das zu erwärmende Wasser gekoppelt ist; vgl. bspw. die DE-OS 33 02 324.

Der Erfindung liegt die Aufgabe zugrunde, die bekannten Warmwasserbereiter dieser Art anlagen- und installationstechnisch wesentlich zu vereinfachen. Diese Aufgabe wird bei einem Warmwasserbereiter gemäß dem Oberbegriff des Patentanspruchs 1 erfindungsgemäß durch die Vereinigung aller Merkmale gemäß diesem Patentanspruch gelöst.

Die Zusammenfassung von Kollektor und Speicher in einer baulichen Einheit ermöglicht eine beträchtliche Einsparung an Leitungen und Umwälzmitteln. Sie erlaubt ferner eine modulare Systembauweise, die gestattet, Systeme mit Warmwasserbereitern gemäß der Erfindung unter Anpassung an individuelle Bedürfnisse nachträglich in bereits vorhandenen Warmwasserbereitungsanlagen zu installieren. Bei nicht ausreichender Solarstrahlungsleistung läßt sich der Solarkollektor gemäß der Erfindung zur Vorwärmung mit anschließender konventioneller Nachheizung nutzen, bspw. in vorhandenen Warmwasserheizungsanlagen.

Durch das integrierte Phasenwechselmaterial, dessen Schmelztemperatur in der Nähe der gewünschten Temperatur des erwärmten Wassers liegt, kann das zeitlich variable Strahlungsangebot derart ausgenutzt werden, daß ein zeitweiliger Überschuß zum Schmelzen des Phäsenwechselmaterials verwendet und dadurch für Zeiten ohne Einstrahlung ein Energievorrat gespeichert wird, der bei geeigneten Klimarandbedingungen eine ständige Nutzung als Durchlauferhitzer mit konstanter Entnahmetemperatur ermöglicht. Die Entnahmetemperatur läßt sich durch die Wahl eines Phasenwechselmaterials mit entsprechender Umwandlungstemperatur variieren.

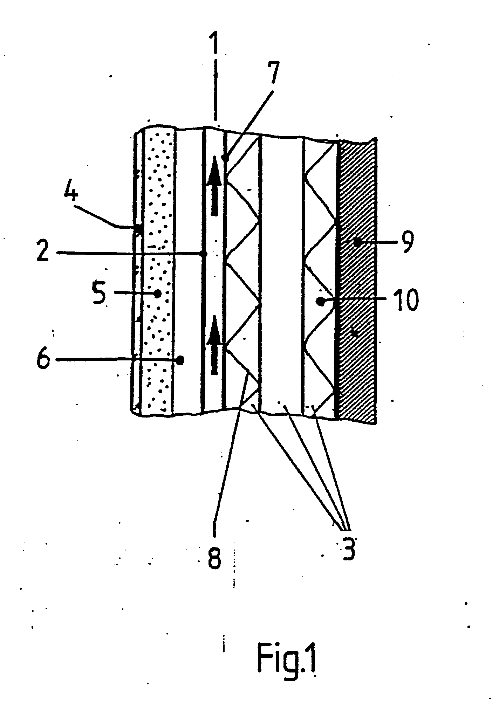

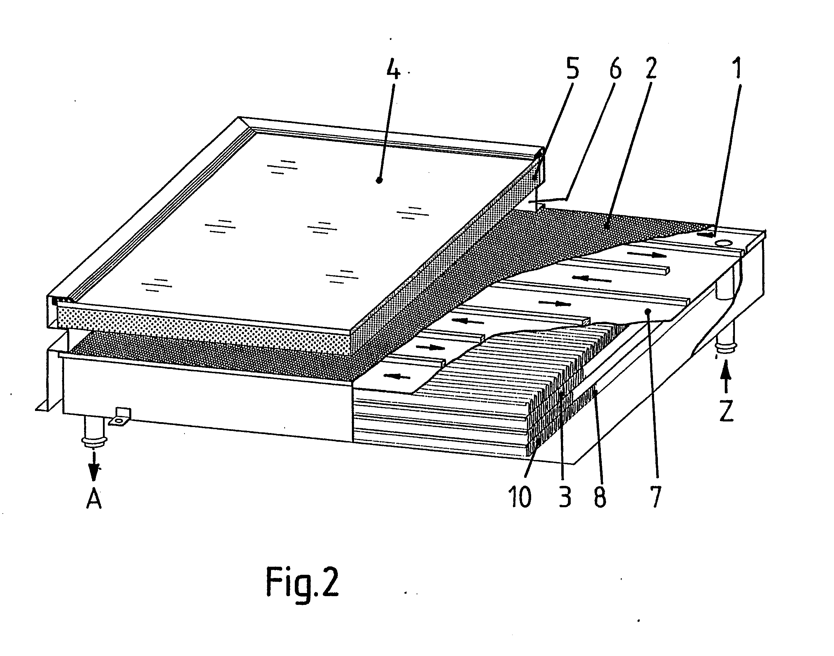

Die Erfindung wird nachstehend in Form eines Ausführungsbeispiels anhand der Figuren 1 und 2 erläutert. Die schematische Figur 1 zeigt das Prinzip eines Warmwasserbereiters gemäß der Erfindung, aus der Figur 2 ist eine praktische Realisierung dieses Prinzips zu entnehmen.

Fig.1 zeigt im Schnitt einen erfindungsgemäß als Warmwasserbereiter ausgebildeten Solarkollektor mit einem Absorber,der von dem zu erwärmenden Wasser 1, wie durch die Strömungspfeile angedeutet, durchströmt wird. Zwischen der einfallenden Solarstrahlung und der ihr zugewandten Fläche 2 des Absorbers befindet sich lediglich eine aus der Glasabdeckung 4 als transparentem Witterungsschutz, der Wärmedämmschicht 5 und dem Luftspalt 6 bestehende, für die Solarstrahlung größtmöglich durchlässige Kollektorabdeckung, die nur geringfügige Wärmeabgabe an die äußere Umgebung erlaubt. Das Wasser 1 wird somit ohne Zwischenschaltung eines Speichermediums im wesentlichen unmittelbar durch die Solarstrahlung erwärmt. Die anderen Absorberflächen, insbesondere die Rückseite 7, sind in sehr gut wärmeleitendem Kontakt mit einem verkapselten Paket aus Metallrippen 8 verbunden. Die engen Rippenzwischenräume 10 sind mit dem Phasenwechselmaterial als Speichermedium 3 verfüllt.

Das Rippenpaket besteht aus möglichst massearmen gewellten Blechen bzw. Blechrippen, die industriell herstellbar sein können und die lagenweise miteinander verbunden sind. Die Rippendichte wird entsprechend der maximalen Einstrahlungsleistung dimensioniert; die Tiefe des gesamten Rippenpakets (zwischen der Absorberrückseite 7 und der rückseitigen Wärmedämmung 9 des Kollektors) ergibt sich aus der klimaangepaßten Dimensionierung des Rippenpakets und der gewünschten Speicherkapazität.

Die im Absorber in Wärme umgewandelte Solarenergie, die nicht durch das Warmwasser 1 abgeführt wird, wird dem aus den Rippen 8 und dem Speichermedium 3 bestehenden Speicher für eine spätere Nutzung zugeführt. Das den Absorber durchströmende Wasser 1 wird somit weitgehend auf konstanter Temperatur gehalten, eine Überhitzung mit problematischer Dampfbildung wird so bei regelmäßiger Wärmeentnahme vermieden.

Fig.2 zeigt ein zum Teil geschnittenes Kollektorspeicher-Modul als Beispiel für die praktische Ausführung eines Warmwasserbereiters gemäß der Erfindung. Über die Wasserzu-und ablaufstutzen Z bzw. A lassen sich mehrere solche Module in Serien-und/oder Parallelschaltung zu modularen Systemen verrohren bzw. in die Wasserführung einer vorhandenen Warmwasserbereitungsanlage einfügen. Das zugeführte, zu erwärmende Wasser 1 tritt auf der Rückseite 7 des Absorbers aus. Zwischen der Oberfläche 2 und der Rückseite 7 des Absorbers befinden sich Stege, die eine mäanderförmige Wasserführung von Z nach A bewirken. Das Wasser 1 wird dabei durch die von der Oberfläche 2 absorbierte Solarenergie erwärmt. Zwischen der einfallenden Solarstrahlung und der Absorberoberfläche 2 befindet sich die aus der Glasabdeckung 4, der Wärmedämmung 5 und dem Luftspalt 6 bestehende transparente Kollektorabdekkung.

Mit der Absorberrückseite 7 ist in sehr gut wärmeleitendem Kontakt das aus den Blechrippen 8 gebildete Rippenpaket verbunden, dessen enge Rippenzwischenräume 10 mit dem Phasenwechselmaterial als Speichermedium ausgefüllt sind.

Die Wasserführung ist dem Schmelz- und Erstarrungsverhalten des Phasenwechselmaterials derart angepaßt, daß die mit dem Phasenwechsel verbundene Volumenänderung nicht zu zerstörenden Spannungen im Rippenpaket 8 führt.

Module gemäß der Fig. 2 werden einzeln oder im modularen Verbund vorteilhaft in die der Solarstrahlung ausgesetzten Fassaden von Gebäuden eingesetzt.

Als Speichermedium zur Aufrechterhaltung einer kontinuierlichen Entnahmetemperatur von bspw. etwa 50°C kann vorteilhaft ein anorganisches Eutektikum aus 38,5 % $NH_4NO_3$ und 61,5 % MG-$(NO_3)_2$ • 6 $H_2O$ mit einer durchschnittlichen Schmelztemperatur von 50,7 °C und einer durchschnittlichen Kristallisationstemperatur von 49,0 °C dienen.

Bei dem Speichermedium kann es sich auch um anderes Phasenmaterial handeln, das aus der einschlägigen Literatur bekannt ist. Weiterhin können auch Zeolithe verwendet werden. Ein einfaches System wäre auch, einfach Wasser zu verwenden.

Die transparente Wärmedämmschicht 5 soll einerseits möglichst viel Licht durchlassen, um so den Absorber 2, 7 zu erwärmen, andererseits soll sie wärmedämmend sein, um bei Bewölkung oder nachts den Speicher bzw. das Phasenmaterial 3 nicht abzukuhlen.

Bei der Wärmedämmschicht kann es sich z.B. um Polymethylmethacrylat nach DE C1 31 24 980 handeln, einen transparenten Schaum, der auch Kapillarstruktur haben kann.
Weiterhin kann es aus Silicaterogel bestehen, wie es aus der EU A1 84 102 626.3 oder aus dem Lawrence Berkeley Laborbericht Transparent Silica Aerogel... von Michael Rubin und Carl M. Lampert, Juni 82, bekannt ist.

Weiterhin kann die Dämmschicht aus einer Wabenstruktur aus Kunststofflamellen bestehen, wobei die Wabendurchmesser kleiner sind als die Schichtdicke bzw. Wabenlänge, die Abmessungen könnten die einer Bienenwabe haben, es können auch Kapillarstrukturen sein.

Der Luftspalt 6 dient dazu, daß im Fall, daß die Wärmedämmschicht wärmeempfindlich ist, kein direkter Kontakt der Wärmedämmschicht mit dem Absorber zustandekommt, da der Absorber bei Stillstand, also ohne Wasserentnahme und bei aufgeheiztem Phasenmaterial, Temperaturen von größer 400 K erreichen kann.

Die Abmessungen in Fig. 1 sind nur schematisch, die Wärmedämmschicht kann etwa 1 - 3 cm dick sein, der Luftspalt 1 - 3 cm, die Schichtdicke des Phasenmaterials 3 - 20 cm oder noch dicker.

## Ansprüche

1. Solar-Warmwasserbereiter, gekennzeichnet durch die Kombination folgender, in Solarrichtung hintereinander angeordneter Komponenten:
   a) einem transparenten Witterungsschutz (4)
   b) einer transparenten Wärmedämmschicht (5)
   c) einem von dem zu erwärmenden Wasser (1) durchströmten Absorber (2, 7)
   d) einem in Kontakt mit der Fläche (7) des Absorbers befindlichen Phasenmaterial (3)
   e) einer Wärmedämmschicht (9).

2. Warmwasserbereiter nach Patentanspruch 1, gekennzeichnet durch eine für Solarstrahlung größtmöglich durchlässige Kollektorabdeckung (4, 5, 6) für die der Strahlung zugewandten Absorberoberflächen (2) und durch mit den übrigen Absorberflächen, insbesondere mit der Absorberrückseite (7), in sehr gut wärmeleitendem Kontakt verbundene Metallrippen (8), deren enge Zwischenräume mit dem Phasenwechselmaterial (3) verfüllt sind.

3. Warmwasserbereiter nach Patentanspruch 2, gekennzeichnet durch eine nach außen mit einem transparenten Witterungsschutz (4) versehene, transparente Wärmedämmschicht (5) mit einem Luftspalt (6) vor den der Strahlung zugewandten Absorberoberflächen, dergestalt, daß die gesamte Abdeckung (4, 5, 6) nur eine geringe Wärmeabgabe an die äussere Umgebung erlaubt.

4. Warmwasserbereiter nach einem der Patentansprüche 1 bis 3,
dadurch gekennzeichnet, daß das Phasenwechselmaterial so beschaffen ist, daß ein zeitweiliger Überschuß an Strahlungsenergie zum Schmelzen des Materials verwendet und dadurch für Zeiten ohne Einstrahlung ein Energievorrat gespeichert wird, der bei geeigneten Klimarandbedingungen eine ständige Nutzung als Durchlauferhitzer mit konstanter Endtemperatur ermöglicht.

5. Warmwasserbereiter nach Patentanspruch 4, dadurch gekennzeichnet, daß die Entnahmetemperatur durch die Wahl eines Phasenwechselmaterials mit entsprechender Umwandlungstemperatur zu variieren ist.

6. Warmwasserbereiter nach einem der Patentansprüche 4 und 5,
dadurch gekennzeichnet, daß als Phasenwechselmaterial ein anorganisches Eutektikum aus 38,5 % $NH_4NO_3$ und 61,5% $MG(NO_3)_2 \bullet 6H_2O$ mit einer durchschnittlichen Schmelztemperatur von 50,7 °C und einer durchscnittlichen Kristallisationstemperatur von 49,0 °C dient.

7. Warmwasserbereiter nach einem der Patentansprüche 1 bis 6,
dadurch gekennzeichnet, daß er in vorhandenen Warmwasserbereitungsanlagen bei nicht ausreichender Solarstrahlungsheizung zur Vorwärmung mit anschließender konventioneller Nachheizung dient.

8. Warmwasserbereiter nach einem der Patentansprüche 1 bis 7,
dadurch gekennzeichnet, daß er als Modul ausgebildet ist, welches die Bildung modularer Systeme und/oder die Einfügung in die Wasserführung vorhandener Warmwasserbereitungsanlagen gestattet.

9. Warmwasserbereiter nach einem der Patentansprüche 1 bis 8,
dadurch gekennzeichnet, daß er in die der Solarstrahlung ausgesetzten Fassaden von Gebäuden einzusetzen ist.

Fig.1

Fig.2

<table>
<tr><td colspan="4"><strong>Europäisches Patentamt</strong></td></tr>
</table>

| | | | |
|---|---|---|---|

**Europäisches Patentamt**

# EUROPÄISCHER RECHERCHENBERICHT

Nummer der Anmeldung

EP 88 10 2904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 121 800 (BM CHEMIE KUNSTSTOFF GmbH) <br> * Seite 5, Zeilen 10-30; Seite 6, Zeile 13 - Seite 7, Zeile 11; Seite 7, Zeile 19 - Seite 8, Zeile 27; Figuren 1,2 * | 1,4,5,9 | F 24 J 2/34 |
| Y | | 2,3,6,7 | |
| Y | WO-A-8 500 212 (STEIN) <br> * Seite 9, Zeilen 3-20; Seite 11, Zeile 10 - Seite 12, Zeile 10; Seite 18, Zeilen 10-23; Figuren 3,4,7-9 * | 2,7 | |
| Y | US-A-2 595 905 (TELKES) <br> * Spalte 2, Zeile 8 - Spalte 3, Zeile 8; Spalte 4, Zeile 42 - Spalte 5, Zeile 3; Figuren 1,2 * | 3 | |
| D,Y | DE-A-3 302 324 <br> (FRAUNHOFER-GESELLSCHAFT ZUR FÖRDERUNG DER ANGEWANDTEN FORSCHUNG E.V.) <br> * Seite 6, Zeile 31 - Seite 7, Zeile 14; Seite 8, Zeile 31 - Seite 9, Zeile 3; Seite 9, Zeilen 17-23; Figur 1 * | 6 | |
| A | DE-A-2 745 324 (STICHTING BOUWCENTRUM) <br> * Seite 17, Zeile 17 - Seite 18, Zeile 14; Figur 6 * | 1 | |
| Y | FR-A-2 433 716 (EURATOM) <br> * Seite 2, Zeile 31 - Seite 5, Zeile 18; Figur 2 * | 1-3 | |
| A | --- -/- | 8 | |

**RECHERCHIERTE SACHGEBIETE (Int. Cl.4)**

F 24 J
F 28 D

Der vorliegende Recherchenbericht wurde für alle Patentansprüche erstellt

| Recherchenort | Abschlußdatum der Recherche | Prüfer |
|---|---|---|
| DEN HAAG | 18-04-1988 | BELTZUNG F.C. |

Europäisches
Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 330 780 (LAING) <br> * Seite 5, Zeile 17 - Seite 9, Zeile 12; Figuren 3,5a,6 * <br> ----- | 1-3 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 18-04-1988 | BELTZUNG F.C. |